# EUROPEAN PATENT SPECIFICATION

(11) **EP 1 587 765 B1**
(45) Date of publication and mention of the grant of the patent: **20.02.2013**
(21) Application number: 03813788.1
(22) Date of filing: 18.12.2003
(51) Int. Cl.: G01N 3/12, G01M 3/32

(54) **A METHOD OF PROOF TESTING GLASS**
VERFAHREN ZUR ABNAHMEPRÜFUNG VON GLAS
PROCEDE D'ESSAI DE SURCHARGE DU VERRE

(30) Priority: 18.12.2002 GB 0229447
(43) Date of publication of application: 26.10.2005
(73) Proprietor: Zogenix, Inc., Emeryville CA 94608 (US)
(72) Inventor: KING, Toby, Palo Alto, CA 94301 (US); BRIDGES, Paul, Palo Alto, CA 94301 (US); SHERGOLD, Oliver c/o Zogenix, Inc., Emeryville, CA 94608 (US)
(74) Representative: Duxbury, Stephen
(86) International application number: PCT/US2003/040587
(87) International publication number: WO 2004/056717

(56) References cited:
- JP-A- 4 256 829
- US-A- 2 314 310
- US-A- 3 230 760
- US-A- 3 251 218
- US-A- 3 771 649
- US-A- 3 879 987
- US-A- 3 894 424
- US-A- 3 955 402
- US-A- 4 916 936

## Description

### Background of the invention

Needle-free injectors are used as an alternative to needle-type hypodermic injectors for delivering liquid drugs and other substances through the skin and into the underlying tissues. The drug is dispensed from a drug capsule having a piston which is driven with sufficient force that the drug is expelled at sufficiently high pressure to pierce the skin. Typically, the drug capsule will comprise a hollow cylindrical chamber narrowing to a discharge orifice at one end, and a piston slidingly and sealingly located at the other. The piston is caused to move towards the orifice to dispense the drug by a ram, powered by a variety of means such as a spring, pressurised gas or pyrotechnic charge. The orifice diameter can vary from about 0.08 mm to about 0.7 mm, according to the application.

The more successful and controllable injectors employ a two-phase injection pressure profile; the first is a short but very high-pressure pulse to puncture the skin and the second is at a lower pressure to dispense the drug through the hole thus formed. Typically, the first pressure pulse will be of around 100 microsecond duration, and have a peak pressure of 300 - 500 bar, and the second will last for around 200 milliseconds with a pressure of around 100 bar. The duration of the second phase will vary according to the volume to be delivered.

It is highly preferred that the drug capsule is transparent, so that the contents may be checked for accuracy and contamination. This requirement has placed a severe limitation on the types of materials that may be used, because the transparent material must be strong enough to withstand the extremely high pressures, and must not adversely affect the drug. As a consequence, virtually all of the needle-free injectors proposed use a plastic drug capsule, typically made from polycarbonate. However, such materials are generally unsuitable for storing the drug, because they absorb water from the drug, or are permeable to oxygen, or react in some way with the drug. Therefore, drug capsules made from plastics are required to be filled immediately before use, a rather inconvenient procedure, with a risk of inaccurate filling and contamination, and requiring training of the operators.

The only material with a long history of satisfactory drug storage is borosilicate glass, but this is very brittle and hence there have been few injectors with glass capsules. The obvious problem with glass capsules is the potential for particles of glass to be ejected if they burst.

The underlying causes of the weakness of glass capsules are tiny flaws which occur during manufacture, such as scratches and cracks.

The "Intraject" manufactured by Weston Medical Limited is a pre-filled single-use disposable needle-free injector, having one of the very few glass capsules suitable for long-term drug storage. This is a borosilicate drug capsule of up to 1 ml capacity, made to exceedingly close manufacturing specifications, and further improved by ion exchange strengthening. The breakage rate for these capsules is exceptionally low, but it is desirable to reduce this still further.

Several attempts have been made to reduce the breakage rate for these capsules. For example, further layers of material have been added to the capsule to provide increased physical strength (see international patent publication WO96/15821 in the name of Weston Medical Limited). However, this approach increases significantly the manufacturing costs of the capsule. Additionally, to still further reduce the breakage rate visual inspection techniques have been employed. However, visual inspection techniques are limited both due to the flaw-size which can be detected and the inherent difficulty in automation, which in turn leads to increased cost. Therefore, there is still a requirement for further reducing the incidence of breakages in a cost-effective manner.

US 3955402 A discloses a method for testing the internal pressure strength of glass bottles. JP 4256829 A discloses a method for pressure testing a ceramic combustor, in which the stress profile of the combustor comprises two stages; a first stage in which the stress is increased substantially linearly up to a peak pressure and a second stage in which the stress is removed substantially instantaneously.

### Summary of the invention

According to the invention, there is provided a method of testing the strength of a glass needle free injector capsule according to claim 1.

Accordingly, the present invention provides a testing method which enables glass needle-free injector drug capsules, to have reduced rates of glass breakage by subjecting the containers to a two-stage proof test. This test can be fully automated. In the case of glass capsules for needle-free injectors, the capsules which survive the proof test have increased probability of surviving the high pressures that the capsule will be subject to during firing. The capsules which fail the proof test are the capsules that would be likely to have failed during firing. Hence, overall the resultant number of capsules which break during firing will be reduced.

The two-stages of the proof test may consist of first ramping the pressure up to a peak pressure over a time of approximately 40 - 250ms, for example 50ms, and then as quickly as possible reducing the pressure to zero (i.e. atmospheric pressure), ensuring that the dwell time at the peak pressure is kept to a minimum.

The reduction of the pressure to zero may take 0-10ms, and preferably less than 2ms.

The capsule is preferably filled with a liquid during the proof test to provide both hydrostatic loading and an accurate simulation of the conditions the capsule will be subject to during firing of the device. The pressure may be applied hydraulically.

### Brief description of the drawings

An example of the invention will now be described in detail with reference to the accompanying drawings, in which:
Figure 1 shows a typical pressure versus time plot for use in the method of the invention; and
Figure 2 shows how the method of the invention can be applied multiple times; and
Figure 3 illustrates a front profile of the mechanical test apparatus.

### Detailed description

During the firing cycle of a needle-free injector, the pressures in the capsule rise above 35MPa. This causes problems for pre-filled needle-free devices, due to drug compatibility requirements - the capsule materials are limited from those which are intrinsically strong, but in which the drug degrades, to borosilicate glasses, which are the industry standard drug storage material, but are prone to catastrophic failure under high stresses.

Borosilicate glasses are not inherently weak. It is the flaws in the glass, generally introduced during manufacturing, which create localised areas of weakness, which, above a stress threshold, lead to rapid crack growth and catastrophic failure. A range of flaws are introduced into the batch, such that some capsules, with the smallest flaw sizes, are strong, whilst others, with the largest flaw sizes, are weak. The consequence of this to needle free injection devices is that a certain percentage of capsules will catastrophically fail during firing.

Glass capsules produced by the Weston manufacturing route have a device failure rate which should be reduced to a minimum. To achieve this, visual inspection techniques are currently used; however, the process is costly. The aim of this invention is to improve on the as-manufactured and visually inspected device failure rate to meet failure rates acceptable to commercial customers in a cost effective manner.

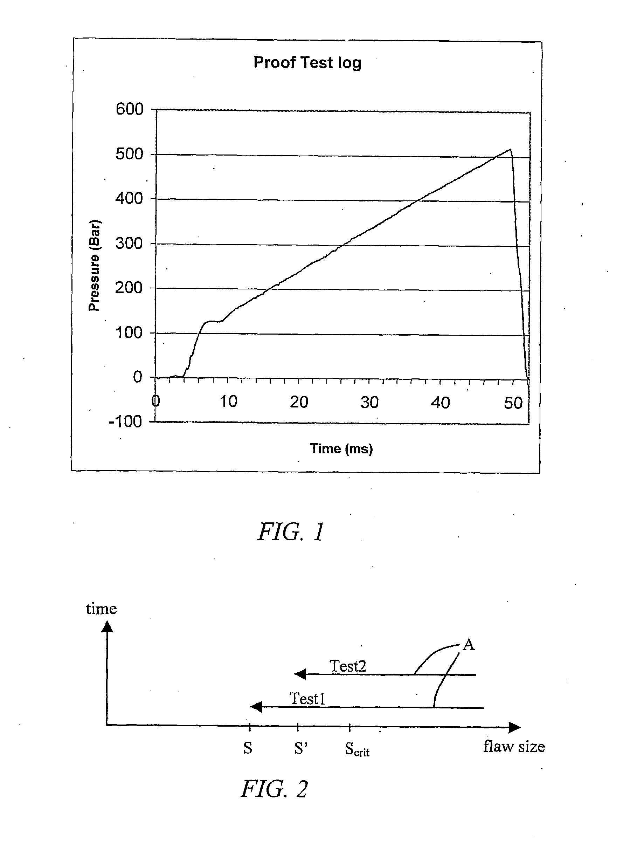

The applicant has found that subjecting a batch of capsules to a two-stage proof test in which the pressure is increased over a time of approximately 50 ms from zero to peak pressures of around 540 bar and then instantaneously reducing the pressure to zero improves the Intraject device failure rate. An example of a suitable pressure time plot from the proof tester developed by Weston Medical is presented in Figure 1.

Essentially, the pressure profile has a first stage in which the pressure increases from a starting pressure to a peak pressure at a first average rate of pressure increase, and a second stage in which the pressure decreases from the peak pressure to the starting pressure at a second, greater, average rate of pressure decrease.

In this specific example, the duration of the first stage is around 50ms with a substantially line pressure increase to a peak pressure of 540 Bar, and the second stage has a duration of around 2ms. The two stages follow each other with no time period during which the peak pressure is maintained.

The proof test works by the following mechanism. Considering first the loading cycle, if, at the precise instant the peak pressure is reached, the statistics of crack growth in a batch of capsules is considered, then all capsules in the batch with any cracks above a particular flaw size, S, will have failed catastrophically. If the pressure is then instantaneously reduced to zero, then to a good approximation, the crack distributions in each capsule will be frozen-in - only the cracks which are moving at a significant speed at the peak pressure will continue to grow. Hence, if there are only a small number of capsules which contain flaws which grow above S after the pressure is reduced to zero, the proof test acts as a near perfect filter, filtering out virtually all capsules with flaw sizes above S. If the pressure is reduced to zero too slowly, there will be a finite time during which flaws in the surviving capsules may continue to grow without catastrophic failure. Consequently, the numbers of capsules in the batch with flaw sizes above S may increase - to the extent that the increase may offset the filtering from the first stage of the proof test.

For needle-free injectors, the purpose of the proof test is to filter out capsules which have cracks above a flaw size, S_{crit} - the critical flaw size which would result in catastrophic failure of the device during firing. This will be achieved when the peak pressure is chosen so that S <= S_{crit}, i.e. a peak pressure greater than that during the firing of the device. The peak pressure of the proof test is determined by the thickness and geometry of the glass being proof tested. Additionally, a factor is introduced to uplift the peak pressure to compensate for the small amount of crack growth which inevitably occurs during the second stage of the test. Typically, for the Intraject glass capsules, the peak pressure of the proof test is in the range 300-900 Bar, and more preferably 300-700 Bar, for example approximately 540 bar.

It has also been demonstrated at Weston Medical that a second successive two-stage proof test, of the type outlined above, with a peak pressure less than the peak pressure of the first proof test and greater than the peak pressure required to filter out flaws of size greater than S_{crit}, further reduces the breakage rate of the capsules during firing.

Figure 2 shows this approach. The arrows A indicate the range of containers which will fail the respective test based on the maximum flaw size present.

At the end of the first proof test (Test1), the limited amount of crack growth which occurs during the second stage will have produced a batch of capsules in which there are a reduced number of capsules with flaw sizes above S_{cript}. During the first stage of the second proof test (Test2), all capsules in the batch with flaw sizes above S', where S' is between S and S_{crit}, will fail. During the second stage of the second proof test, when the pressure is reduced almost instantaneously to zero, inevitably, there will be some flaw growth in the batch of capsules; however, the probability of flaw growth is much reduced. The reason for this is that the majority of flaw growth only occurs in the very small number of capsules with flaws between S and S', i.e. the remaining capsules in which flaw growth occurred during the second stage of the first proof test. Since there will only be a small number of capsules in which the flaw sizes grew above S' during the second stage of the second proof test, the total number of capsules with flaw sizes above S_{scrit} will be a small number of a small number and hence the total number of capsules in the batch with flaw size above S_{scrit} will reduce. Further successive proof tests will also theoretically further reduce the number of capsules in the batch with flaw sizes above S_{crit}.

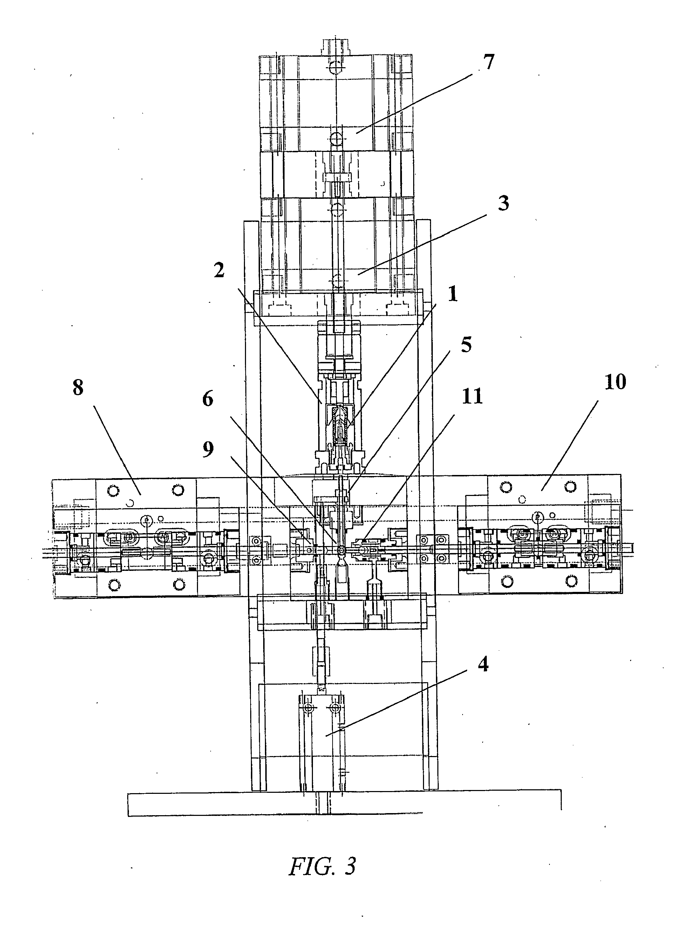

Figure 3 presents an engineering diagram of the Weston Medical proof tester. Operation of the proof tester follows four discrete stages: Setting; Filling; Loading; and Unloading.

### Setting

The glass capsule (**1**) is positioned into a test pot (**2**) which is subsequently loaded into position above the 'stinger' (**5**) - a sealed movable pipe that connects the high-pressure block (**6**) to the capsule test pot (**2**). The pot is clamped by a pneumatic actuator (**3**) and then the 'stringer' (**5**) is inserted into place by another pneumatic actuator (**4**). The high-pressure seals are then in place to prevent leaks from the 'stinger'.

### Filling

A low-pressure system fills the volume of the high-pressure unit (**6**) with a liquid, usually water, and then the capsule (**1**) is filled with the same liquid through the 'stinger' (**5**). The capsule (**1**) is then sealed by a valve at one end in the high-pressure unit and at the other end, at the top of the capsule, by a seal lowered by a third pneumatic actuator (**7**). The volume is also sealed by a ceramic ball held in place upon a seal (**11**) by a hydraulic valve (**10)**. The volume of liquid in the capsule is ready to be pressurised.

### Loading

A high speed hydraulic valve (**8**) drives a high quality piston through the high pressure seal (**9**) to increase the pressure in the capsule. Using the feedback from a high-speed piezoelectric pressure sensor, a high-speed processor controls the rate of increase in pressure as required.

### Unloading

The system unloads the pressure in the capsule by actuating the other high-speed hydraulic valve (**10**) which then releases the ball-seal (**11**). With the ball free to move there is a near-instantaneous drop in pressure.

An alternative to this approach is to use a mechanical servo driven drive to load a liquid containing capsule via a sealing piston. The unloading cycle of the proof test is completed by a large pneumatic cylinder that, similar to the hydraulic system, is pressurized during the loading phase, and allows rapid release of the air during the unloading phase. The method has been demonstrated to be slightly slower than the hydraulic method disclosed above, but is almost equally effective.

Only one specific pressure profile has been given in Figure 1. The duration of the different stages of the pressure profile and the pressures will of course be selected in dependence on the particular containers being tested, and the conditions to which the container is to be subsequently subjected. Suitable ranges for these time and pressure values have been given above and in the claims below.

## Claims

1. A method of proof testing the strength of a glass needle free injector capsule for delivering liquid drugs and other substances through the skin and into the underlying tissues of a patient-whereby during injection the skin is punctured during a very high pressure pulse, the firing pressure, the proof testing method comprising pressurizing the glass needle free injector capsule, whereby the capsule fails the test if it breaks and whereby when the capsule survives the proof test it has an increased probability of surviving the firing pressure,
wherein the glass needle free injector capsule is subjected to a pressure profile, which pressure profile comprises two stages, a first stage wherein the glass needle free injector capsule is subjected to a pressure profile which involves increasing the pressure from a starting pressure to a peak pressure at a first average rate of pressure increase, which peak pressure is greater than the firing pressure, and a second stage in which the pressure is decreased from the peak pressure to the starting pressure at a second, greater, average rate of pressure decrease, which second stage follows the first stage with no time period during which the peak pressure is maintained, wherein the second stage of the pressure profile involves reducing the peak pressure substantially instantaneously to the starting pressure.

2. The method according to claim 1, wherein the starting pressure is atmospheric pressure.

3. The method as claimed in claim 3, wherein the first stage of the pressure profile involves ramping the pressure substantially linearly to the peak pressure.

4. The method according to any of the preceding claims wherein pressurizing the capsule comprises filling the capsule with a liquid and pressurizing the liquid.

5. The method according to claim 4, wherein the pressure is applied by first sealing the capsule and applying the pressure hydrostatically using the liquid.

6. The method according to claims 4 or 5, wherein water is used to apply the pressure hydrostatically.

7. The method according to claims 5 or 6 wherein the capsule seal is applied using an o-ring which seals under hydrostatic pressure.

8. The method according to claim 7 wherein the pressure is released in the second stage by opening a hydraulic valve.

9. The method according to any of the claims 8 wherein the pressure is applied using a mechanical servo driven drive and the pressure is released in the second stage by a pneumatic cylinder.

10. The method according to any of the preceding claims wherein the capsule is subjected to a plurality of the tests.

11. The method according to any of the preceding claims wherein the first stage of the pressure profile has a duration of 30 - 250ms.

12. A method according to any of the preceding claims, wherein the first stage of the pressure profile has a duration of 40 - 70ms.

13. The method according to any of the preceding claims, wherein the second stage of the pressure profile has a duration of o-10ms.

14. The method according to claim 13 wherein the second stage of the pressure profile has a duration of o-2ms.

15. The method according to any of the preceding claims, wherein the peak pressure is in the range 300-900 Bar.

16. The method according to claim 15, wherein the peak pressure is in the range 300-700 Bar.

17. The method according to any of the preceding claims, wherein the pressure to which the capsule is subjected is controlled using feedback from a pressure sensor.

18. A method of testing a batch of glass needle free injector capsules comprising subjecting each capsule of the batch to a method according to any of the preceding claims.

## Patentansprüche

1. Verfahren zur Abnahmeprüfung der Festigkeit einer glasnadelfreien Injektionskapsel zum Liefern von flüssigen Arzneimitteln und anderen Substanzen durch die Haut und in das untenliegende Gewebe eines Patienten, wobei während der Injektion die Haut während eines sehr hohen Druckpulses, dem Abgabedruck, punktiert wird, wobei das Abnahmeprüfverfahren das Unterdrucksetzen der glasnadelfreien Injektionskapsel umfasst, wobei die Kapsel die Priwifung nicht besteht, falls sie bricht und wodurch, wenn die Kapsel die Abnahmeprüfung besteht, eine verstärkte Wahrscheinlichkeit des Überstehens des Abgabedruckes aufweist,
wobei die glasnadelfreie Injektionskapsel einem Druckprofil ausgesetzt wird, wobei das Druckprofil zwei Stufen aufweist, eine erste Stufe, bei der die glasnadelfreie Injektionskapsel einem Druckprofil ausgesetzt wird, das ein Ansteigen des Druckes von einem Startdruck zu einem Spitzendruck bei einer ersten mittleren Rate des Druckanstieges umfasst, wobei der Spitzendruck größer als der Abgabedruck ist, und eine zweite Stufe, bei der der Druck von dem Spitzendruck zum Startdruck bei einer zweiten, größeren mittleren Rate der Druckverminderung abnimmt, wobei die zweite Stufe der ersten Stufe mit keiner Zeltspanne folgt, während der Spitzendruck aufrecht erhalten wird, wobei die zweite Stufe des Druckprofils die Verminderung des Spitzendrucks im Wesentlichen sofort zu dem Startdruck umfasst.

2. Vorfahren nach Anspruch 1, wobei der Startdruck Atmosphärendruck ist.

3. Herfahren nach Anspruch 1, wobei die erste Stufe des Druckprofils das Ansteigenlassen des Drucks im Wesentlichen linear auf den Spitzendruck umfasst.

4. Verwahren nach einem der vorstehenden Ansprüche, wobei das Unterdrucksetzten der Kapsel das Füllen der Kapsel mit einer Flüssigkeit und das Unterdrucksetzen der Flüssigkeit umfasst.

5. Verfahren nach Anspruch 4, wobei der Druck durch Abdichten der Kapsel und Anlegen des Drucks hydrostatisch unter Verwindung der Flüssigkeit erfolgt.

6. Verwahren nach Anspruch 4 oder 5, wobei Wasser zum hydrostatischen Analegen des Druckes verwendet wird.

7. Verfahren nach Anspruch 5 oder 6, wobei die Kapseldichtung unter Verwendung eines O-Rings abgewendet wird, der unter hydrostatischem Druck abdichtet.

8. Vorfahren nach Anspruch 7, wobei der Druck in der zweiten Stufe durch Öffnen eines hydraulischen Ventiles angelassen wird.

9. Vorfahren nach Anspruch 8, wobei der Druck unter Verwerdung eines mechanischen Servoantriebs angelegt wird und der Druck in der zweiten Stufe durch einen Pneumatikzylinder angelassen wird.

10. Vorfahren nach einem der vorstehenden Ansprüche, wobei die Kapsel einer Anzahl von Prüfungen unterzogen wird.

11. Verwahren nach einem der vorstehenden Ansprüche, wobei die erste Stufe des Druckprofils eine Dauer von 30-250ms aufweist.

12. Verwahren nach einem der vorstehenden Ansprüche, wobei die erste Stufe des Druckprofils eine Dauer von 40-70ms aufweist.

13. Verfahren nach einem der vorstehenden Anspruche, wobei die zweite Stufe des Druckprofils eine Dauer von 0-10ms aufweiset.

14. Vorfahren nach Anspruch 13, wobei die zweite Stufe des Druckprofils eine Dauer von 0-2ms aufweiset.

15. Verfahren nach einem der vorstehenden Ansprüche, wobei der Spitzendruck im Bereich von 300-900 bar liegt.

16. Vorfahren nach Anspruch 15, wobei der Spitzendruck im Bereich von 300-700 bar liegt.

17. Verfahren nach einem der vorstehenden Ansprüche, wobei der Druck, dem die Kapsel ausgesetzt wird, unter Rückkopplung von einem Drucksensor gesteuert wird.

18. Vorfahren zum Prüfen einer Charge von glasnadelfreien Injektionskapseln mit dem Aufsetzen jeder Kapsel der Charge eines Verfahrens nach einem der vorstehenden Ansprüche.

## Revendications

1. Procédé d'essai de la résistance d'une capsule d'injection exempte d'aiguille de verre pour délivrer des médicaments liquides et d'autres substances à travers la peau et dans les tissus sous-jacents d'un patient, par lequel, pendant une injection, la peau est perforée pendant une pulsation de pression très élevée, la pression de déclenchement, le procédé d'essai comprenant la mise sous pression de la capsule d'injection exempte d'aiguille de verre, par lequel la capsule échoue au test si elle se rompt et par lequel, lorsque la capsule survint à l'essai, elle a une plus grande probabilité de survivre à la pression de déclenchement,
dans lequel la capsule d'injection exempte d'aiguille de verre est soumise à un profil de pression, lequel profil de pression comprend deux étages, un premier étage dans lequel la capsule d'injection exempte d'aiguille de verre est soumise à un profil de pression qui implique l'augmentation de la pression d'une pression de début à une pression crête à un premier taux moyen d'augmentation de pression, laquelle pression crête est supérieure à la pression de déclenchement, et un deuxième étage dans lequel la pression est diminuée de la pression crête à la pression de début à un deuxième taux moyen plus grand de diminution de pression, lequel deuxième étage suit le premier étage sans période de temps pendant laquelle la pression crête est maintenue, dans lequel le deuxième étage du profil de pression implique la réduction la pression crête sensiblement instantanément à la pression de début.

2. Procédé selon la revendication 1, dans lequel la pression de début est la pression atmosphérique.

3. Procédé selon la revendication 1, dans lequel le premier étage du profil de pression implique l'augmentation de la pression sensiblement linéairement à la pression crête.

4. Procédé selon l'une quelconque des revendications précédentes, dans lequel la mise sous pression de la capsule comprend le remplissage de la capsule avec un liquide et la mise sous pression du liquide.

5. Procédé selon la revendication 4, dans lequel la pression est appliquée en scellant d'abord la capsule et en appliquant la pression de manière hydrostatique en utilisant le liquide.

6. Procédé selon la revendication 4 ou 5, dans lequel de l'eau est utilisée pour appliquer la pression de manière hydrostatique.

7. Procédé selon la revendication 5 ou 6, dans lequel le joint de capsule est appliqué en utilisant un joint torique qui scelle sous une pression hydrostatique.

8. Procédé selon la revendication 7, dans lequel la pression est relâchée dans le deuxième étage en ouvrant une vanne hydraulique.

9. Procédé selon l'une quelconque des revendications 1 à 8, dans lequel la pression est appliquée en utilisant une commande asservie mécaniquement et la pression est relâchée dans le deuxième étage par un vérin pneumatique.

10. Procédé selon l'une quelconque des revendications précédentes, dans lequel la capsule est soumise à une pluralité des tests.

11. Procédé selon l'une quelconque des revendications précédentes, dans lequel le premier étage du profil de pression a une durée de 30 à 250 ms.

12. Procédé selon l'une quelconque des revendications précédentes, dans lequel le premier étage du profil de pression a une durée de 40 à 70 ms.

13. Procédé selon l'une quelconque des revendications précédentes, dans lequel le deuxième étage du profil de pression a une durée de 0 à 10 ms.

14. Procédé selon la revendication 13, dans lequel le deuxième étage du profil de pression a une durée de 0 à 2 ms.

15. Procédé selon l'une quelconque des revendications précédentes, dans lequel la pression crête est dans la plage 300 à 900 bars.

16. Procédé selon la revendication 15, dans lequel la pression crête est dans la plage 300 à 700 bars.

17. Procédé selon l'une quelconque des revendications précédentes, dans lequel la pression à laquelle la capsule est soumise est commandée en utilisant une rétroaction provenant d'un capteur de pression.

18. Procédé de test d'un lot de capsules d'injection exemptes d'aiguille de verre comprenant l'application à chaque capsule du lot Procédé selon l'une quelconque des revendications précédentes.
